Europäisches Patentamt

European Patent Office

Office européen des brevets

(19)

(11) **EP 1 369 946 A1**

(12) # EUROPEAN PATENT APPLICATION

(43) Date of publication:
**10.12.2003 Bulletin 2003/50**

(51) Int Cl.7: **H01M 8/06**

(21) Application number: **03009436.1**

(22) Date of filing: **25.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **04.06.2002 JP 2002162790**

(71) Applicant: **NISSAN MOTOR CO., LTD.
Yokohama-shi Kanagawa-ken (JP)**

(72) Inventor: **Abe, Mitsutaka
Yokosuka-shi, Kanagawa (JP)**

(74) Representative: **Schaeberle, Steffen
Hoefer & Partner,
Patentanwälte,
Gabriel-Max-Strasse 29
81545 München (DE)**

(54) **Warm-up device for catalytic reactor**

(57)     A fuel cell power plant is provided with a reformer (18) producing a reformate gas and a carbon monoxide removal device (1) removing carbon monoxide from the reformate gas as a result of catalytic reactions. When the carbon monoxide removal device (1) is operating at a low temperature, a heat exchanger (10) supplies gaseous heat transmitting medium to a heat exchange portion (5) of the carbon monoxide removal device (1) and warms the catalyst using heat exchange operations with the catalyst in the carbon monoxide removal device (1). The pressure regulation valve (12) regulates the pressure of the gaseous heat transmitting medium and maintains the temperature of the catalyst between the catalyst activation temperature and the predetermined upper limiting temperature of the catalyst in order to employ latent heat resulting from the heat of condensation of the steam for heating the catalyst.

FIG.1

EP 1 369 946 A1

## Description

FIELD OF THE INVENTION

This invention relates to warming up of a catalytic reactor such as a carbon monoxide removal device provided in a fuel cell power plant.

BACKGROUND OF THE INVENTION

A fuel cell power plant using reformate gas is provided with a reformer which generates the reformate gas from a hydrocarbon fuel. However carbon monoxide (CO) is contained in the reformate gas. Since CO causes deterioration of the fuel cell, CO contained in the reformate gas must be removed before the reformate gas is supplied to the fuel cell stack. Preferential oxidation is known as a means of removing CO from the reformate gas. The preferential oxidation is a reaction under the presence of a catalyst.

In order to promote preferential oxidation, the temperature of the catalyst has to be maintained at a predetermined activation range. When the power plant is started under cold conditions, it is therefore necessary to perform warming up of the catalyst until the temperature of the catalyst rises to the activation temperature range.

When the fuel cell power plant is used as a source of driving power for a vehicle, it is preferred that the required warm-up period is shortened. JP2000-028590 published by the Japanese Patent Office in 2000 discloses a method of combusting a gaseous mixture of air and fuel to generate high-temperature combustion gas and heating the catalyst from the outside of the CO removal device using the combustion gas.

SUMMARY OF THE INVENTION

In this prior-art technique, it is necessary to increase the temperature of the combustion gas in order to shorten the time period required for warming up of the catalyst, by applying a large amount of heat to the catalyst. However when the temperature of the combustion gas increases, the problem arises that a part of the catalyst in proximity to the combustion gas starts to deteriorate before the temperature of the whole catalyst increases. On the other hand, when the temperature of the combustion gas is reduced, the amount of heat applied to the catalyst by the combustion gas decreases and as a result the time period required for warming up of the power plant lengthens.

It is therefore an object of this invention to advance the activation of the catalyst of a catalytic reactor while preventing deterioration of the catalyst.

In order to achieve the above object, this invention provides a warm-up device for a catalytic reactor performing a predetermined chemical reaction mediated by a catalyst activated at a predetermined activation temperature. The warm-up device comprises a vapor supply mechanism supplying gaseous heat transmitting medium, a heat exchange portion performing heat exchange operations between the catalyst and the gaseous heat transmitting medium, a pressure control valve regulating a pressure of the gaseous heat transmitting medium in the heat exchange portion, and a passage recirculating the heat transmitting medium condensed in the heat exchange portion.

The details as well as other features and advantages of this invention are set forth in the remainder of the specification and are shown in the accompanying drawings.

BRIEF DESCRIPTION OF THE DRAWINGS

FIG. 1 is a schematic diagram of a fuel cell power plant according to this invention.

FIG. 2 is similar to FIG. 1, but showing a situation where the power plant is warmed up.

FIG. 3 is a flowchart showing a start-up control routine executed by a controller according to this invention.

FIG. 4 is a schematic diagram of a fuel cell power plant according to a second embodiment of this invention.

FIG. 5 is similar to FIG. 4, but showing a situation where the power plant is warmed up

FIG. 6 is a flowchart showing a start-up control routine executed by a controller according to the second embodiment of this invention.

FIG. 7 is a schematic diagram of a fuel cell power plant according to a third embodiment of this invention.

FIG. 8 is a flowchart showing a pre-heat control routine executed by a controller according to the third embodiment of this invention.

DESCRIPTION OF THE PREFERRED EMBODIMENTS

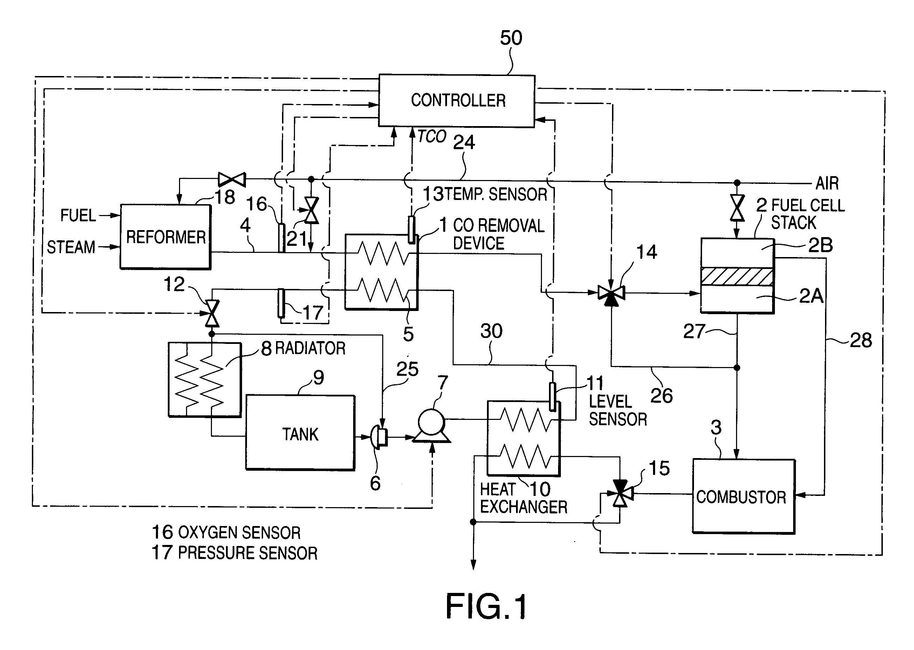

Referring to FIG. 1 of the drawings, a fuel cell power plant for driving a vehicle is provided with a fuel cell stack 2 comprising a plurality of polymer electrolyte fuel cells (PEFC).

The fuel cell stack 2 is provided with an anode 2A and a cathode 2B. A hydrogen-rich gas is supplied to the anode 2A through a three-way valve 14 from a carbon monoxide (CO) removal device 1. Air is supplied to the cathode 2B from an air supply pipe 24 through a valve. The three-way valve 14 has the function to switch over between a section supplying hydrogen-rich gas from the CO removal device 1 to the anode 2A of the fuel cell stack 2 and a section supplying the hydrogen-rich gas to a combustor 3 through a bypass passage 26.

The fuel cell stack 2 generates electric power as a result of electrochemical reactions between hydrogen (H2) in the hydrogen-rich gas supplied to the anode 2A and oxygen (02) in air supplied to the cathode 2B. Power generation operations result in the discharge of anode effluent from the anode 2A to an anode -effluent passage 27 and cathode effluent from the cathode 2B to a cathode -effluent passage 28. A certain amount of hydrogen is remains in the anode effluent and a certain amount of oxygen remains in the cathode effluent. The respective discharges are supplied to the combustor 3 through the anode-effluent passage 27 and the cathode-effluent passage 28. High-temperature combustion gas is produced as a result of combustion of the discharges in the combustor 3. The bypass passage 26 is joined to the anode-effluent passage 27.

High-temperature combustion gas produced in the combustor 3 is supplied to the heat exchanger 10 through a three-way valve 15. The three-way valve 15 has the function to switch over a section supplies the high-temperature combustion gas to the heat exchanger 10 and a section which discharges the high-temperature combustion gas into the atmosphere.

The heat exchanger 10 heats and vaporizes a heat transmitting medium using heat exchange operations between the high-temperature combustion gas and the heat transmitting medium which is supplied from a pump 7.

An aqueous solution of ethylene glycol may be used as the heat transmitting medium.

The gaseous heat transmitting medium produced in the heat exchanger 10 is transferred to a heat exchange portion 5 in the CO removal device 1 through a vapor supply passage 30 and performs heat exchange operations with the preferential oxidation catalyst in the CO removal device 1. Thereafter the heat transmitting medium is condensed in a pressure regulating valve 12 and recirculated to a tank 9 through a radiator 8. The pressure regulating valve 12 regulates the vapor pressure of the heat transmitting medium by adjusting the cross-sectional area of the passage for the heat transmitting medium. Consequently it is possible to maintain the gaseous heat transmitting medium in the heat exchange portion 5 to a preferred temperature range. At the same time, a part of the gaseous heat transmitting medium is condensed and re-enters liquid phase.

A thermostat 6 is provided in the outlet of the -tank 9. A bypass passage 25 is connected to the thermostat 6. The bypass passage 25 introduces liquid heat transmitting medium discharged from the pressure regulating valve 12 directly into the pump 7 by bypassing the tank 9 and the radiator 8. The thermostat 6 controls the temperature of the heat transmitting medium supplied to the pump 7 to a predetermined temperature as a result of selectively connecting the bypass passage 25 or the tank 9 to a suction port of the pump 7. The predetermined temperature of the thermostat 6 is 80 degrees centigrade.

Methanol as a hydrocarbon fuel is supplied together with steam and air from the air supply pipe 24 to a reformer 18. The reformer 18 produces reformate gas by performing known autothermal reforming (ATR) operations comprising a combination of steam reforming and partial oxidation reforming. These operations are performed with respect to the gaseous mixture of methanol, air and steam. The reformate gas comprises a concentration of 1.5% of carbon monoxide.

The reformate gas is transferred to the CO removal device 1 through a reformate gas supply pipe 4. Air from the air supply pipe 25 is also supplied to the reformate gas supply pipe 4 through a flow rate control valve 21. A catalyst supporting platinum - ruthenium on aluminum, abbreviated as Pt-Ru/Al2O3, is stored as a preferential oxidation catalyst in the CO removal device 1. Carbon monoxide is removed from the reformate gas using the reaction below with respect to the gaseous mixture of air and reformate gas flowing into the reformate gas supply pipe 4.

$$2CO + O_2 \rightarrow 2CO_2$$

The CO removal device performing promoting this reaction is generally termed a preferential oxidation reactor (PROX reactor).

The concentration of carbon monoxide is reduced by the CO removal device 1 to a level of 40 parts per million (ppm) which does not cause poisoning the fuel cell. The reformate gas after removal of the carbon monoxide is termed a hydrogen-rich gas in the following description. The hydrogen-rich gas is supplied to the anode 2A of the fuel cell stack 2 through the three-way valve 14.

The fuel cell power plant is provided with a controller 50 for controlling the switching operation of the three-way valves 14, 15, the openings of the flow rate control valve 21 and the pressure regulating valve 12 and the operation of the pump 7. The controller 50 comprises a microcomputer provided with a central processing unit (CPU), a read-only memory (ROM), a random access memory (RAM) and an input/output interface (I/O interface). The controller 21 may comprise a plurality of microcomputers.

In order to perform this control, the fuel cell power plant is provided with a level sensor 11 detecting the surface level of the aqueous solution of ethylene glycol in the heat exchanger 10, a temperature sensor 13 detecting the catalyst temperature in the CO removal device 1, an oxygen sensor 16 detecting the concentration of oxygen in the reformate gas and a pressure sensor 17 detecting the vapor pressure of the heat transmitting medium in the CO removal device 1. The data detected by these sensors are input as signals to the controller 50.

The temperature of the catalyst must be restricted to a predetermined temperature range in order to ensure suitable operation of the CO removal device 1. The lower limit for the temperature range is the catalyst activation temperature of 120 degrees centigrade. The upper limit for the temperature range is a temperature of 200 degrees centigrade representing the temperature limit at which reverse shift reactions do not occur in the CO removal device 1. A reverse shift reaction is described below.

$$CO_2 + H_2 \rightarrow CO + H_2O$$

Since it is preferred to ensure rapid increases in the catalyst temperature when performing start-up of the fuel cell power plant, the upper limit of the temperature range is set to an upper limiting temperature at which the catalyst does not deteriorate. The upper limiting temperature in a reducing gaseous environment is set to 350 degrees centigrade at which the catalyst begins to undergo sintering. The upper limiting temperature in an oxidizing gaseous environment is set to 120 degrees centigrade at which the catalyst begins to undergo oxidation deterioration.

During normal operation, the reformate gas entering the CO removal device 1 comprises a reducing gaseous environment containing large amount of hydrogen. During start-up of the power plant, either reducing or oxidizing gaseous environments are possible. During steady-state operation of the fuel cell power plant, exothermic preferential oxidation reactions are performed in the CO removal device 1. Thus during steady-state operation of the fuel cell power plant, the heat exchange portion 5 has the function of reducing the high temperature of the catalyst in the CO removal device 1.

In the steady-state operation of the power plant as shown in FIG. 1, the three-way valve 14 is maintained to the section in which hydrogen-rich gas is supplied to the anode 2A of the fuel cell stack 2 and the three-way valve 15 is maintained to the section discharging the combustion gas into the atmosphere. The three-way valves 14 and 15 in the figures close the connecting passage at the black triangle and open the connecting passage at the white triangle. The connecting passages connected to the two white triangles are connected to one another.

In the steady state operation of the power plant, heating of the heat transmitting medium is not performed by the heat exchanger 10 and the heat transmitting medium absorbs excess heat from the catalyst at the heat exchange portion 5 in the CO removal device 1 and radiates it in the radiator 8. The thermostat 6 regulates the temperature of the heat transmitting medium at the suction port of the pump 7 at the constant temperature of 80 degrees centigrade.

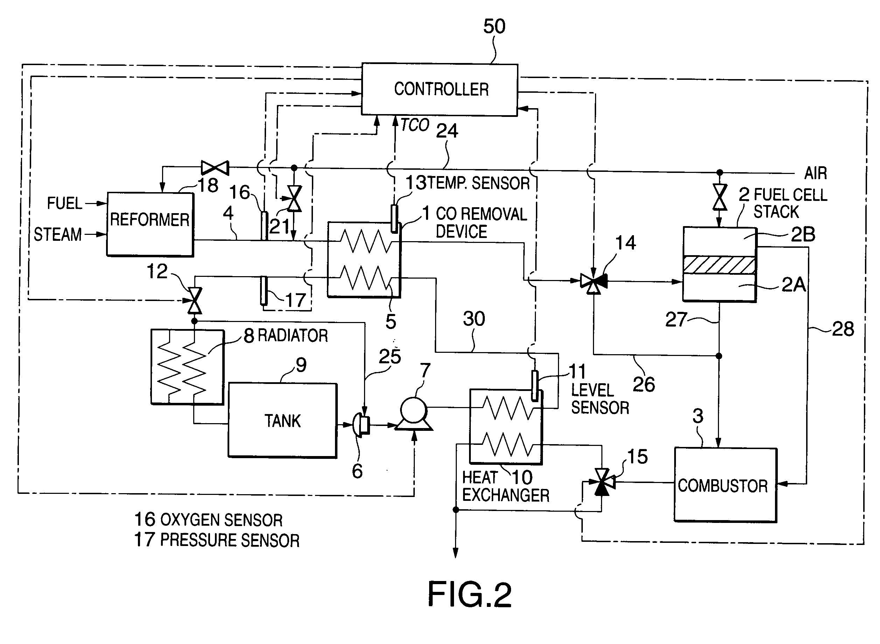

Next referring to FIG. 2, start-up operations of the fuel cell power plant under cold conditions will be described. At this time, the three-way valve 14 is maintained at the section connecting the bypass passage 26 to the CO removal device 1 and the three-way valve 15 is maintained to the section supplying combustion gas from the combustor 3 to the heat exchanger 10.

As a result, since the reformer 18 and the CO removal device 1 are not activated during start-up, a gaseous mixture of unreformed fuel is directly supplied from the reformer 18 to the combustor 3 via the CO removal device 1 and the bypass passage 26.

Furthermore since the power generation operations have not been commenced by the fuel cell stack 2, air in the air supply pipe 24 is supplied without modification from the cathode-effluent passage 28 to the combustor 3. High-temperature combustion gas is produced in the combustor 3 as a result of combustion of this gaseous mixture. The combustion gas is supplied to the heat exchanger 10 via the three-way valve 15 and vaporizes the heat transmitting medium in the heat exchanger 10.

The gaseous heat transmitting medium heats the preferential oxidation catalyst in the heat exchange portion 5 of the CO removal device 1. Thereafter in response to temperature conditions, it condenses in the pressure regulating valve 12 and is recycled to the suction port of the pump or to the tank 9 through the radiator 8. The pressure regulating valve 12 regulates the condensation temperature and the vaporization temperature in the heat exchange portion 5 as described above.

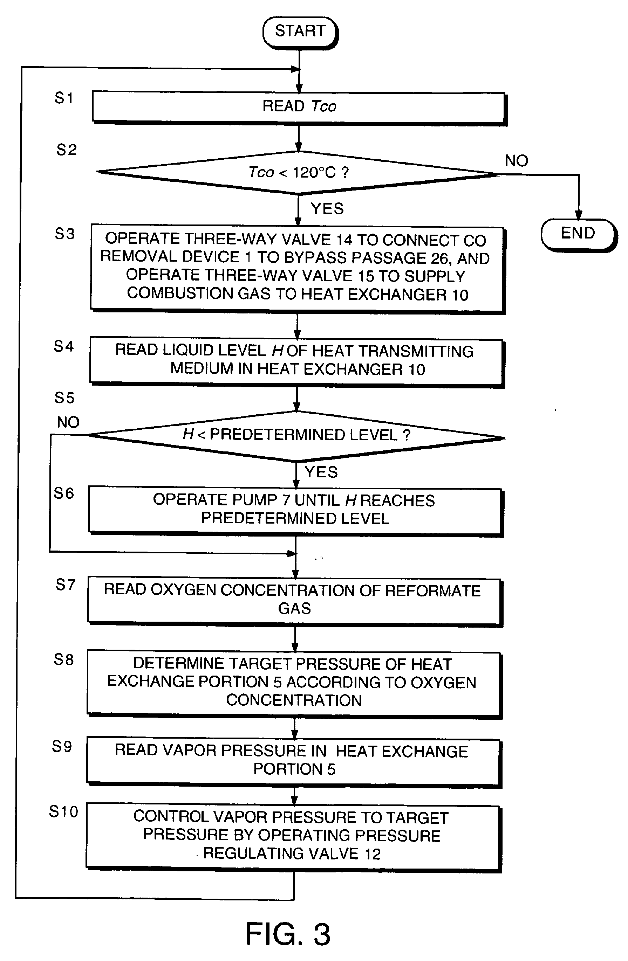

Referring to FIG. 3, a start-up control routine performed by the controller 50 when starting up the fuel cell power plant will be described. This routine is performed only once when start-up of the fuel cell power plant is commanded.

Firstly in a step S1, the controller 50 reads a temperature *TCO* of the CO removal device 1 detected by the temperature sensor 13.

Then in a step S2, it is determined whether or not the temperature TCO of the CO removal device 1 has reached a temperature of 120 degrees centigrade which is the catalyst activation temperature described above.

When the temperature *TCO* of the CO removal device 1 has reached a temperature of 120 degrees C, the controller 50 immediately terminates the routine.

When the temperature *TCO* of the CO removal device 1 is less than a temperature of 120 degrees centigrade, in a step S3, the controller 50 operates the three-way valve 14 to connect the CO removal device 1 to the combustor 3 through the bypass passage 26 so as to supply an unreformed gaseous mixture from the CO removal device 1 to the combustor 3. Further, the controller 50 operates the three-way valve 15 to supply the combustion gas from the combustor 3 to the heat exchanger 10 in order to heat the heat transmitting medium in the heat exchanger 10.

Then in a step S4, the controller 50 reads the liquid level *H* of the heat transmitting medium in the heat exchanger 10 detected by the level sensor 11.

In a step S5, the controller 50 determines whether or not the level *H* of the heat transmitting medium in the heat exchanger 10 has reached a predetermined level. The predetermined level represents a value at which it is determined whether or not a sufficient amount of heat transmitting medium is stored in the heat exchanger 10 in order to vaporize the heat transmitting medium.

When the level *H* of heat transmitting medium is less than the predetermined level, the controller 50 operates the pump 7 in a step S6 and transfers heat transmitting medium in the tank 9 to the heat exchanger 10 so that the level *H* reaches the predetermined level.

After the process in the step S6 is completed, the controller 50 performs the process in a step S7. In the step S5, when the level *H* of heat transmitting medium has reached the predetermined level, the controller 50 skips the step S6 and performs the process in the step S7.

In the step S7, the controller 50 reads the oxygen concentration of reformate gas detected by the oxygen sensor 16. The oxygen concentration in the unreformed gaseous mixture is detected immediately after start-up when the reformer 18 is not operating.

Then in a step S8, the controller 50 uses the oxygen concentration in order to determine whether or not the gaseous environment of the catalyst in the CO removal device 1 is reducing or oxidizing. When the gaseous environment is oxidizing, the target temperature of the heat exchange portion 5 is set to a temperature of 110 degrees centigrade which is lower than the upper limiting temperature for an oxidizing gaseous environment.

A target pressure of gaseous heat transmitting medium in the heat exchange portion 5 is set in order to achieve the target temperature of 110 degrees centigrade. When an aqueous solution of ethylene glycol is used as the heat transmitting medium, the target pressure corresponding to the target temperature of 110 degrees centigrade is atmospheric pressure plus 0.01 megapascals.

Herein, the target temperature of 110 degrees centigrade for the oxidizing gaseous environment is less than the catalyst activation temperature of 120 degrees centigrade, but once the reformer 18 has started reforming reaction, the resultant reformate gas has a higher temperature than the target temperature and rapidly raises the catalyst temperature in the CO removal device 1 to the activation temperature. The reformate gas also provides a reducing gaseous environment in the CO removal device 1.

When the catalyst environment is reducing, the target temperature of the heat exchange portion 5 is set to 130 degrees centigrade which is higher than the target temperature in oxidizing environment. The target pressure for the vaporized heat transmitting fluid in the heat exchange portion 5 is set to achieve the target temperature of 130 degree centigrade. When using an aqueous solution of ethylene glycol as the heat transmitting fluid, the target pressure corresponding to the temperature of 130 degrees centigrade is atmospheric pressure plus 0.1 megapascals.

The target temperature for the reducing gaseous environment is set so that the condensation temperature of the heat transmitting medium is positioned between the upper limiting temperature at which catalyst deterioration does not occur and the catalyst activation temperature.

Then in a step S9, the controller 50 reads the pressure of the gaseous heat transmitting medium in the heat exchange portion 5 detected by the pressure sensor 17.

In a step S10, the controller 50 feedback controls the opening of the pressure regulating valve 12 in response to the deviation of the detected pressure from the target pressure. Since the pressure in the heat exchange portion 5 is maintained to the target pressure, the process in the step S10 allows the gaseous heat transmitting medium supplied from the steam supply passage 30 to the heat exchange portion 5 to be condensed in the heat exchange portion 5. Thus large amounts of condensation heat are generated and effectively heat the catalyst. However the temperature of the heat exchange portion 5 does not increase to a high temperature resulting in catalyst deterioration.

After the process in the step S10, the controller 50 repeats the process from the step S1. When the temperature *TCO* of the CO removal device 1 reaches a temperature of 120 degrees centigrade, the routine is terminated.

After the temperature *TCO* of the CO removal device 1 has reached a temperature of 120 degrees centigrade, the controller 50 executes steady-state operation as shown in FIG. 1. That is to say, the three-way valve 15 is switched so that the combustion gas from the combustor 3 is discharged into the atmosphere. The pressure regulating valve 12 is placed in a fully open position and the discharge amount of the pump 7 is controlled to a predetermined amount adapted for steady-state operation. The flow rate control valve 21 is opened and air is supplied to enable preferential oxidation reaction in the CO removal device 1. The three-way valve 14 is switched so that hydrogen-rich gas is supplied from the CO removal device 1 to the anode 2A.

During steady-state operation, as described above, the heat transmitting medium which is maintained to a temperature of 80 degrees centigrade by the thermostat 6 absorbs the excess heat from the catalyst in the heat exchange portion 5 of the CO removal device 1. This heat is radiated from the radiator 8. In this manner, it is possible to heat and cool the catalyst in the CO removal device 1 using the same heat transmitting medium and the same heat exchange portion 5.

In this fuel cell power plant, since the heat of combustion of the anode effluent combusted in the combustor 3 is used as the source of heat for heating the heat transmitting medium, a preferred energy-efficient solution is obtained.

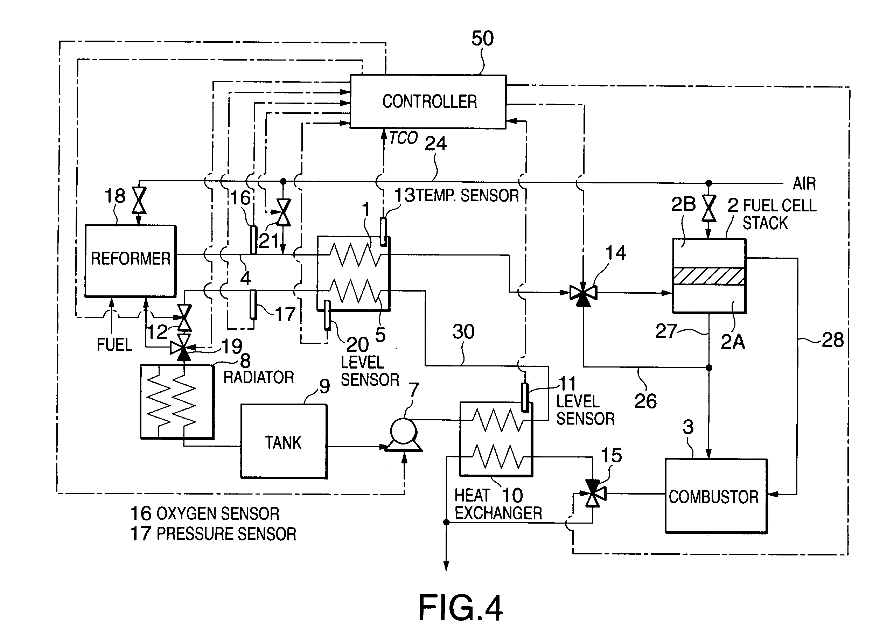

Referring to FIGs. 4 - 6, a second embodiment of this invention will be described.

Referring to FIG. 4, a fuel cell power plant according to this embodiment differs from the power plant according to the first embodiment in that pure water is used as the heat transmitting medium instead of the aqueous solution of ethylene glycol, and the supply of steam to the reformer 18 is also performed using the water in the tank 9.

For this purpose, a three-way valve 19 is provided downstream of the pressure regulation valve 12. The three-way valve 19 selectively leads the flow of water or steam from the pressure regulation valve 12 to the radiator 8 or the reformer 18 in response to the signals from the controller 50. The bypass passage 25 and the thermostat 6 in the first embodiment are not provided in this embodiment.

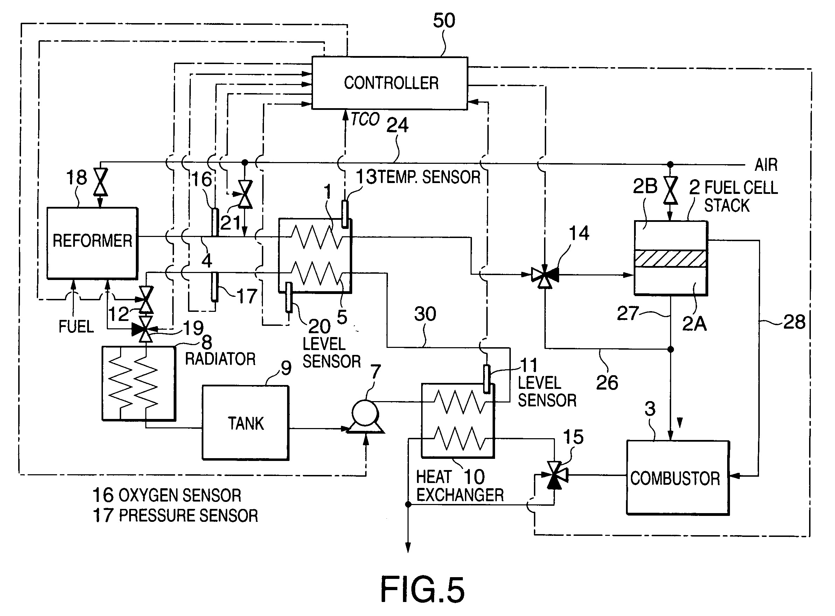

As shown in FIG. 5, during start-up of the power plant under cold conditions, the controller 50 heat the water from the tank 9 in the heat exchanger 10 and supplies the resulting steam to the heat exchange portion 5 of the CO removal device 1. The controller 50 controls the opening of the pressure regulation valve 12 so that the condensation temperature for the steam coincides with the target temperature set in proximity to the catalyst activation temperature. The condensed water is recycled from the pressure regulation valve 12 through the radiator 8 and the three-way valve 19 to the tank 9.

When the reformer 18 reaches a state in which reforming reactions are enabled, the controller 50 places the pressure regulation valve 12 in a fully open position, switches the three-way valve 19 and supplies steam discharged from the pressure regulation valve 12 to the reformer 18. Thereafter the reformer 18 produces reformate gas by reforming the gaseous fuel making use of air supplied from the air supply pipe 24 and steam discharged from the heat exchange portion 5 in the CO removal device 1.

During steady-state operations as shown in FIG. 1, the water level in the heat exchange portion 5 is detected using the level sensor 20. The controller 50 controls the discharge amount of the pump 7 so that the water level is maintained to a target water level. The switching of the three-way valves 14 and 15 is the same as that described with reference to the first embodiment.

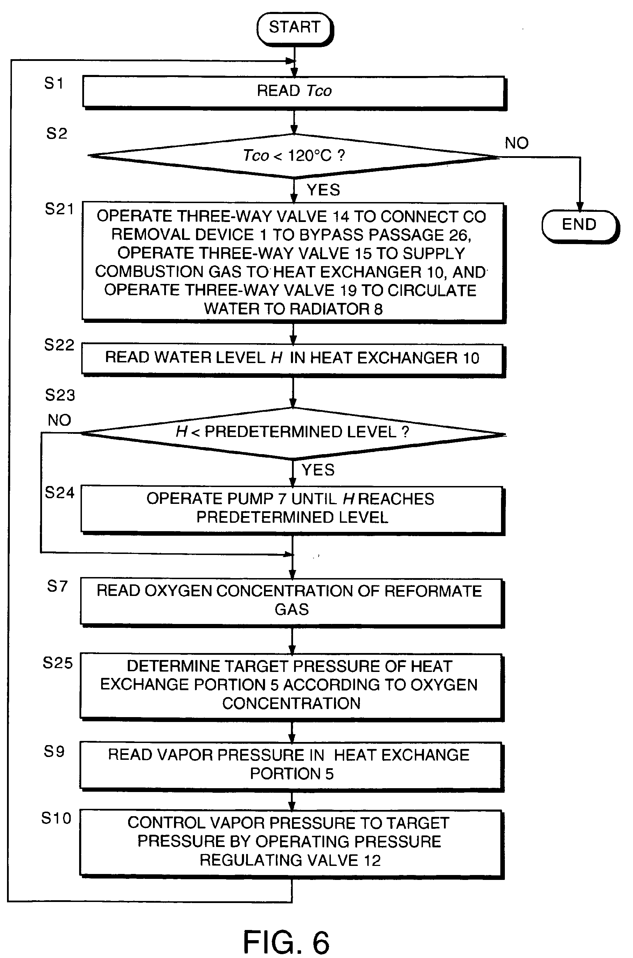

Referring to FIG. 6, a start-up control routine executed by the controller 50 during start-up of the fuel cell power plant will be described. This routine is a replacement of the start-up control routine of FIG. 3 of the first embodiment.

The process in the step S1 and S2 is the same as that of the routine of FIG. 3 according to the first embodiment.

In a step S21, the controller 50 switches the three-way valves 14 and 15 in the same manner as the step S3 of the first embodiment, but in addition, the three-way valve 19 is switched so that the water flowing out of the pressure regulating valve 12 flows into the radiator 18.

Then in a step S22, the controller 50 detects the water level *H* in the heat exchanger 10 detected by the level sensor 11.

In a step S23, the controller 50 determines whether or not the level *H* has reached a predetermined level. The predetermined level represents a value at which it is determined whether or not a sufficient amount of water is stored in the heat exchanger 10 in order to produce steam.

When the water level *H* is less than the predetermined level, the controller 50 operates the pump 7 in a step S24 and supplies water in the tank 9 to the heat exchanger 10 so that the water level *H* reaches the predetermined level.

After the process in the step S24, the controller 50 performs the process in the step S7.

In the step S23, when the water level *H* has reached the predetermined level, the controller 50 skips the step S24 and performs the process of the step S7.

In the step S7, the controller 50 reads the oxygen concentration of reformate gas detected by the oxygen sensor 16 in the same manner as the first embodiment.

Then in a step S25, the controller 50 uses the oxygen concentration in order to determine whether or not the gaseous environment of the catalyst in the CO removal device 1 is a reducing environment or an oxidizing environment. When the gaseous environment is oxidizing, the target temperature of the heat exchange portion 5 is set to a temperature of 110 degrees centigrade which is lower than the upper limiting temperature for an oxidizing gaseous environment. The pressure of steam in the heat exchange portion 5 is set in order to reach the target temperature of 110 degrees centigrade. The target pressure corresponding to this target temperature when water is used as the heat transmitting medium is atmospheric pressure plus 0.04 megapascals.

When the gaseous environment of the catalyst is reducing, the target temperature of the heat exchange portion 5 is set to 130 degrees centigrade which is higher than that for an oxidizing atmosphere. The steam pressure of the heat exchange portion 5 is then regulated to achieve this target temperature. The target pressure corresponding to this target temperature when water is used as the heat transmitting medium is atmospheric pressure plus 0.17 megapascals.

The target pressure for the reducing gaseous environment is set so that the condensation temperature of the steam is a value between the upper limiting temperature at which catalyst deterioration does not occur and the catalyst activation temperature.

The process in the step S9 and the step S10 is the same as that of the routine of FIG. 3 according to the first embodiment.

In the step S2, after the temperature *TCO* of the CO removal device 1 reaches a temperature of 120 degrees centigrade the controller 50 executes the steady-state operation as shown in FIG. 4. In the same manner as the first embodiment, in addition to operating the flow rate control valve 21, the pressure regulation valve 12 and the three-way valves 14, 15, the three-way valve 19 is switched so that steam flowing out of the pressure regulation valve 12 is supplied to the reformer 18. Furthermore the operation of the pump 7 is controlled so that the water level in the heat exchange portion 5 detected by the level sensor 20 is maintained to the target water level.

According to this embodiment, during steady-state operation, it is possible to use steam generated in the heat exchange portion 5 of the CO removal device 1 for steam reforming operations of fuel in the reformer 18. Furthermore during start-up under cold conditions, operating the pressure regulation valve 12 makes it possible to perform efficient warming up of the catalyst in the CO removal device 1 using the heat of condensation from steam in the heat exchange portion 5.

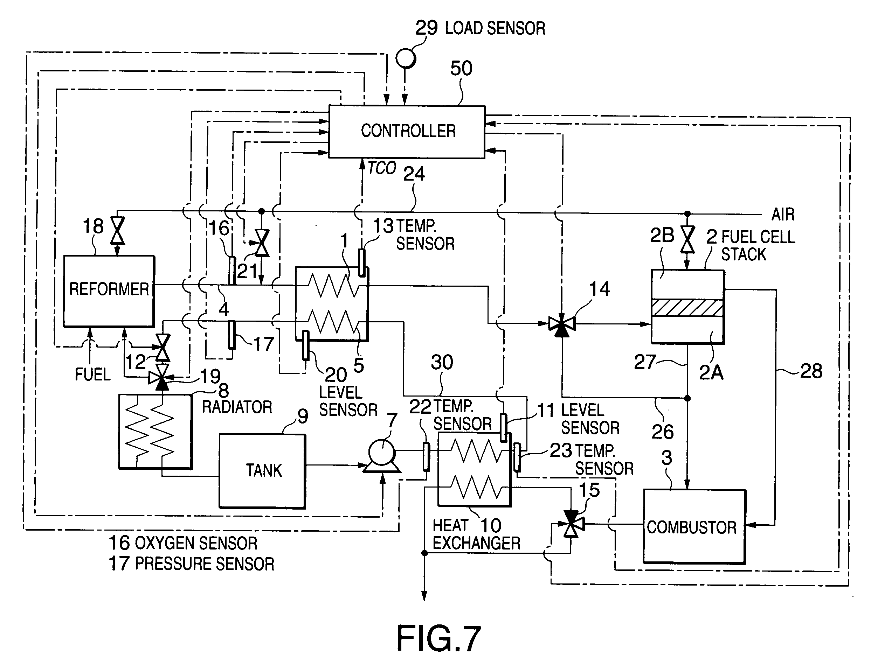

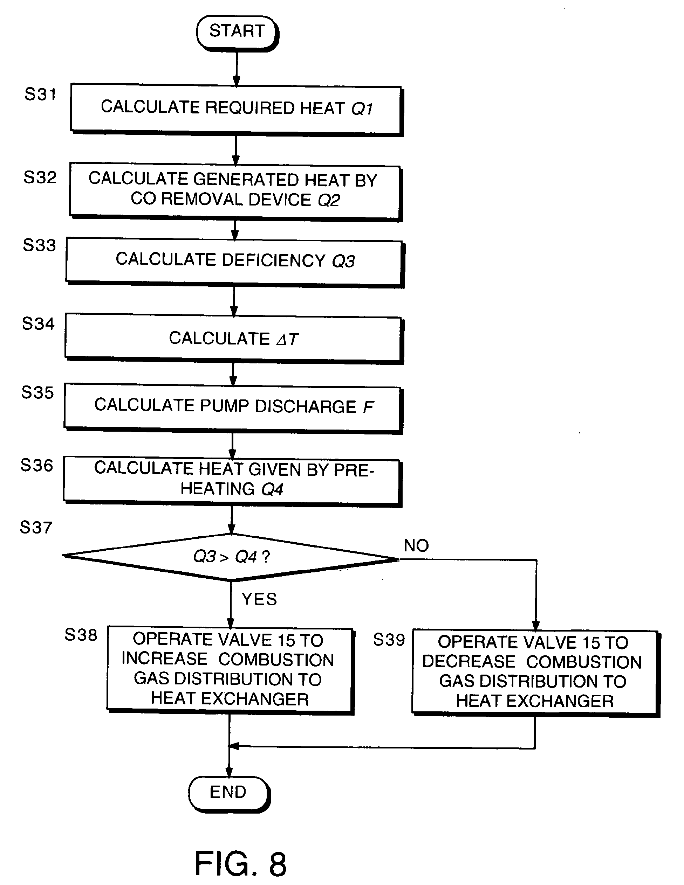

Referring to FIGs. 7 and 8, a third embodiment of this invention will be described.

Referring to FIG. 7, a fuel cell power plant according to this embodiment corresponds to the fuel cell power plant according to the second embodiment with the addition of a temperature sensor 22, 23 and a load sensor 29.

The temperature sensor 22 detects a temperature of water supplied to the heat exchanger 10 from the pump 7. The temperature sensor 23 detects a temperature of steam supplied to the CO removal device 1 from the heat exchanger 10. The load sensor 29 detects a power generation load exerted on the fuel cell stack 2 from the electrical apparatus driven by the fuel cell stack 2. The temperature and the power generation load detected by the sensors are input as respective signals into the controller 50.

The control routine performed during start-up of the fuel cell power plant according to this embodiment is the same as that in the second embodiment. This embodiment differs from the second embodiment with respect to the preheating of water in the heat exchanger 10 depending on operating conditions during steady-state operation.

After the catalyst in the CO removal device 1 reaches an activation temperature as a result of executing the start-up control routine in FIG. 6, steam produced in the heat exchange portion 5 of the CO removal device 1 is supplied to the reformer 18. In other words, the heat exchange portion 5 must produce the amount of steam required for the reformer 18. However when the heat release resulting from preferential oxidation reactions in the CO removal device 1 is low, it is sometimes the case that the required amount of steam can not be supplied to the reformer 18. For example, there is the possibility that this type of problem will arise during transient operating conditions such as when the power generation load on the fuel cell stack 2 increases or when shifting from start-up operation to steady-state operation.

In this embodiment, pre-heating of the water in the heat exchanger 10 is performed so that the heat exchange portion 5 generates the amount of steam required by the reformer 1 during the above situations.

Referring to FIG. 8, a pre-heating control routine performed by the controller 50 for the above purpose will be described. This routine is executed at intervals of a hundred milliseconds during steady-state operation of the fuel cell power plant, that is to say, after the start-up control routine is completed.

Firstly in a step S31, the controller 50 uses the power generation load on the fuel cell stack 2 detected by the load sensor 29 in order to calculate a heat amount $Q1$ to produce the amount of steam required by the reformer 18. The amount of hydrogen required by the fuel cell stack 2 is determined corresponding to the power generation load of the fuel cell stack 2. As a result, the reformate gas supply amount of the reformer 18 is determined and the amount of steam required for reforming operation can be determined. The heat amount $Q1$ is the amount of heat added to water by the heat exchange portion 5 in order to produce the required amount of steam.

Then in a step S32, the controller 50 calculates the amount of heat $Q2$ produced by the supplied amount of reformate gas causing preferential oxidation reactions mediated by the catalyst in the CO removal device 1.

Then in a step S33, the controller 50 calculates the shortfall $Q3$ by subtracting the reaction heat amount $Q2$ from the consumed heat amount $Q1.$

In a step S34, the controller 50 calculates the temperature increase factor $\Delta T = Tb - Ta$ due to the heat exchanger 10 based on the water temperature $Ta$ detected by the temperature sensor 22 and the water temperature $Tb$ detected by the temperature sensor 23. However on the first occasion that this routine is performed, when start-up control is completed, the three-way valve 15 is switched so that combustion gas produced by the combustor 3 is discharged into the atmosphere. Consequently the temperature increase *factor* $\Delta T$ *in* the heat exchanger 10 is zero.

Then in a step S35, the controller 50 calculates the discharge amount $F$ of the pump 7. This is calculated based on the steam amount required by the reformer 1.

In a step S36, the pre-heat amount $Q4$ is calculated based on Equation (1) below. The pre-heat amount $Q4$ on the first occasion the routine is performed is zero.

$$Q4 = \Delta T\ F\ Cp \qquad\qquad (1)$$

where, $Cp$ = the specific heat of water.

In a step S37, the controller 50 compares the shortfall $Q3$ of the heat amount with the pre-heat amount $Q4.$ When the shortfall $Q3$ is greater than the pre-heat amount $Q4,$ it means that the amount of steam produced by the heat exchange portion 5 using the heat of catalytic reactions in the CO removal device 1 will not satisfy the amount of steam required by the reformer 18. In this case, in a step S38, the controller 50 operates the three-way valve 15 so that the supply amount of combustion gas to the heat exchanger 10 from the combustor 3 increases. On the first occasion on which the routine is performed, since the pre-heat amount $Q4$ is zero, if the shortfall $Q3$ is a positive value, the supply of combustion gas to the heat exchanger 10 from the combustor 3 in the step S38 is resumed.

On the other hand, when the shortfall $Q3$ is not greater than the pre-heat amount $Q4$, it means that the amount of steam produced by the heat exchange portion 5 using the heat of catalytic reactions in the CO removal device 1 will satisfy the amount of steam required by the reformer 18. In this case, in a step S39, the controller 50 operates the three-way valve 15 so that the supply amount of combustion gas to the heat exchanger 10 from the combustor 3 decreases.

The reason that the supply amount of combustion gas to the heat exchanger 10 from the combustor 3 in the step S39 is reduced even when the shortfall $Q3$ is equal to the pre-heat amount $Q4$ in the step S38 is as follows.

During an increase in load, the reaction amount in the CO removal device 1 is increased and the catalyst temperature is increases as a result of the increase in the supply amount of reformate gas. Thus it is thought to be due to the fact that the shortfall $Q3$ in the amount of heat tends to decrease.

Even after completion of start-up control, when the heat exchange portion 5 of the CO removal device 1 can not supply the amount of steam required by the reformer 18 during a transient operation state, it is still possible to supplement the shortfall $Q3$ in the amount of heat by pre-heating the water supplied to the heat exchange portion 5. Thus it is possible to increase the transient response characteristics of the fuel cell stack 2.

In this embodiment, the shortfall $Q3$ in the amount of heat was calculated on the basis of the amount of heat produced by catalytic reactions in the CO removal device 1 and the amount of heat $Q1$ consumed in producing steam required by the reformer 18. However it is possible to determine the amount of pre-heating by comparing the amount of steam produced by the heat exchange portion 5 as a result of catalyst reactions in the CO removal device 1 with the amount of steam required by the reformer 18. In this case, the shortfall in the steam amount can be calculated and the amount of heat required to produce an amount of steam corresponding to the shortfall can be calculated as the shortfall $Q3$.

In this embodiment, a valve which can control the flow rate of combustion gas supplied to the heat exchanger 10 is used in the three-way valve. When determining the opening of the three-way valve 15 in the step S38 or step S39, it is preferable to first calculate the combustion gas pressure upstream of the three-way valve 15 from the combustion gas temperature in the combustor 3 and a composition of gas supplied to the combustor 3. The target opening of the three-way valve 15 is then determined based on the combustion gas pressure, the combustion gas temperature, the temperature of water supplied to the heat exchanger 10, and the difference between the shortfall $Q3$ and the pre-heat amount $Q4$. On the basis of this determination, it is possible to vary the pre-heat amount $Q4$ in a highly accurate manner with respect to fluctuations in the shortfall $Q3$ in the amount of heat.

The contents of Tokugan 2002-162790, with a filing date of June 4, 2002 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

For example, in each of the above embodiments, although the embodiments applied the invention to the warming up of a carbon monoxide removal device, it is possible to apply the invention to the warming up of all types of catalytic reactor requiring warming up.

The embodiments of this invention in which an exclusive property or privilege is claimed are defined as follows.

## Claims

1. A warm-up device for a catalytic reactor (1) performing a predetermined chemical reaction mediated by a catalyst activated at a predetermined activation temperature, the warm-up device comprising:

   a vapor supply mechanism (7, 9, 10) supplying gaseous heat transmitting medium;
   a heat exchange portion (5) performing heat exchange operations between the catalyst and the gaseous heat transmitting medium;
   a pressure control valve (12) regulating a pressure of the gaseous heat transmitting medium in the heat exchange portion (5); and
   a passage (8, 9, 25) recirculating the heat transmitting medium condensed in the heat exchange portion (5).

2. The warm-up device as defined in Claim 1, wherein the recirculation passage (8, 9, 25) is provided with a tank (9) storing the heat transmitting medium

3. The warm-up device as defined in Claim 1 or Claim 2, wherein the heat transmitting medium comprises an aqueous solution of ethylene glycol.

**4.** The warm-up device as defined in any one of Claim 1 through Claim 3, wherein the vapor supply mechanism (7, 9, 10) has a function of supplying the heat transmitting medium in a liquid state to the heat exchange portion 5 so as to absorb a heat of the catalyst in the heat exchange portion (5), and the warm-up device further comprises a radiator (8) which radiates heat from the heat transmitting medium.

**5.** The warm-up device as defined in any one of Claim 1 through Claim 4, wherein the catalytic reactor (1) comprises a carbon monoxide removal device (1) adapted to be used in a fuel cell power plant for producing a hydrogen-rich gas by removing carbon monoxide from a reformate gas, the fuel cell power plant comprising a fuel cell stack (2) which generates electric power using the hydrogen-rich gas, and a reformer (18) producing the reformate gas by reforming a hydrocarbon fuel.

**6.** The warm-up device as defined in Claim 5, wherein the reformer (18) comprises a device (18) producing the reformate gas by steam reforming operations on the hydrocarbon fuel, the heat transmitting medium comprises water, the vapor supply mechanism (7, 9, 10) has a function of supplying water in a liquid state to the heat exchange portion (5), and the warm-up device further comprises a valve (19) supplying the reformer (18) with steam produced by evaporation of the water in the heat exchange portion (5) by a heat of the catalyst.

**7.** The warm-up device as defined in Claim 6, wherein the vapor supply mechanism (7, 9, 10) comprises a pre-heater (10) preheating water, and the warm-up device further comprises a sensor (29) detecting a power generation load on the fuel cell stack, and a controller (50) functioning to calculate a heat amount ($Q1$) required for generating a required amount of steam which is to be supplied to the reformer (18) based on the power generation load (S31), calculate a reaction heat amount ($Q2$) produced in the carbon monoxide removal device (1) when the required amount of steam is supplied to the reformer (18) and a corresponding amount of the reformate gas is supplied to the carbon monoxide removal device (1), and control the pre-heater (10) according to a difference between the required heat amount ($Q1$) and the produced heat amount ($Q2$).

**8.** The warm-up device as defined in any one of Claim 1 through Claim 7, wherein the vapor supply mechanism (7, 9, 10) comprises a heater (10) heating the heat transmitting medium and a pump (9) supplying the heat transmitting medium to the heater (10).

**9.** The warm-up device as defined in any one of Claim 1 through Claim 8, wherein the warm-up device further comprises a sensor (13) detecting a temperature of the catalyst and a controller (50) functioning to reduce an opening of the pressure control valve (12) when the temperature of the catalyst is lower than the activation temperature in order to maintain a condensation temperature of the heat transmitting medium to a value between the catalyst activation temperature and a predetermined upper limiting temperature for the catalyst.

**10.** The warm-up device as defined in Claim 9, wherein the warm-up device further comprises a sensor (16) detecting an oxygen concentration of an atmosphere around the catalyst and the controller (50) further functions to perform a determination as to whether the atmosphere around the catalyst is an oxidizing environment or a reducing environment based on the oxygen concentration, and to set the upper limiting temperature for the catalyst to different values according to a result of the determination (S8).

FIG.1

CONTROLLER 50

TCO 24

FUEL →
STEAM → REFORMER

18
16
13 TEMP. SENSOR
1 CO REMOVAL DEVICE

AIR

2 FUEL CELL STACK
2B
2A

4
21
12
17
5
30
14
27
28
26

8 RADIATOR
9
TANK
25
6
7
11 LEVEL SENSOR
10 HEAT EXCHANGER
15
3 COMBUSTOR

16 OXYGEN SENSOR
17 PRESSURE SENSOR

EP 1 369 946 A1

FIG.2

16 OXYGEN SENSOR
17 PRESSURE SENSOR

START

S1 | READ *Tco*

S2 | *Tco* < 120°C ? — NO → END

YES

S3 | OPERATE THREE-WAY VALVE 14 TO CONNECT CO REMOVAL DEVICE 1 TO BYPASS PASSAGE 26, AND OPERATE THREE-WAY VALVE 15 TO SUPPLY COMBUSTION GAS TO HEAT EXCHANGER 10

S4 | READ LIQUID LEVEL *H* OF HEAT TRANSMITTING MEDIUM IN HEAT EXCHANGER 10

S5 | *H* < PREDETERMINED LEVEL ?

NO

YES

S6 | OPERATE PUMP 7 UNTIL *H* REACHES PREDETERMINED LEVEL

S7 | READ OXYGEN CONCENTRATION OF REFORMATE GAS

S8 | DETERMINE TARGET PRESSURE OF HEAT EXCHANGE PORTION 5 ACCORDING TO OXYGEN CONCENTRATION

S9 | READ VAPOR PRESSURE IN HEAT EXCHANGE PORTION 5

S10 | CONTROL VAPOR PRESSURE TO TARGET PRESSURE BY OPERATING PRESSURE REGULATING VALVE 12

# FIG. 3

FIG.4

16 OXYGEN SENSOR
17 PRESSURE SENSOR

FIG.5

START

S1 — READ *Tco*

S2 — *Tco* < 120°C ?

— NO → END
— YES ↓

S21 — OPERATE THREE-WAY VALVE 14 TO CONNECT CO REMOVAL DEVICE 1 TO BYPASS PASSAGE 26, OPERATE THREE-WAY VALVE 15 TO SUPPLY COMBUSTION GAS TO HEAT EXCHANGER 10, AND OPERATE THREE-WAY VALVE 19 TO CIRCULATE WATER TO RADIATOR 8

S22 — READ WATER LEVEL *H* IN HEAT EXCHANGER 10

S23 — *H* < PREDETERMINED LEVEL ?

— NO
— YES ↓

S24 — OPERATE PUMP 7 UNTIL *H* REACHES PREDETERMINED LEVEL

S7 — READ OXYGEN CONCENTRATION OF REFORMATE GAS

S25 — DETERMINE TARGET PRESSURE OF HEAT EXCHANGE PORTION 5 ACCORDING TO OXYGEN CONCENTRATION

S9 — READ VAPOR PRESSURE IN HEAT EXCHANGE PORTION 5

S10 — CONTROL VAPOR PRESSURE TO TARGET PRESSURE BY OPERATING PRESSURE REGULATING VALVE 12

# FIG. 6

FIG.7

```
                        ┌──────────┐
                        │  START   │
                        └────┬─────┘
                             │
                             ▼
S31   ┌──────────────────────────────────────┐
      │   CALCULATE REQUIRED HEAT Q1          │
      └──────────────────┬───────────────────┘
                         │
                         ▼
S32   ┌──────────────────────────────────────┐
      │   CALCULATE GENERATED HEAT BY         │
      │   CO REMOVAL DEVICE Q2                │
      └──────────────────┬───────────────────┘
                         │
                         ▼
S33   ┌──────────────────────────────────────┐
      │   CALCULATE DEFICIENCY Q3             │
      └──────────────────┬───────────────────┘
                         │
                         ▼
S34   ┌──────────────────────────────────────┐
      │   CALCULATE ΔT                        │
      └──────────────────┬───────────────────┘
                         │
                         ▼
S35   ┌──────────────────────────────────────┐
      │   CALCULATE PUMP DISCHARGE F          │
      └──────────────────┬───────────────────┘
                         │
                         ▼
S36   ┌──────────────────────────────────────┐
      │   CALCULATE HEAT GIVEN BY PRE-        │
      │   HEATING Q4                          │
      └──────────────────┬───────────────────┘
                         │
                         ▼
S37                   ╱─────────╲              NO
                    ╱   Q3 > Q4 ? ╲──────────────────┐
                    ╲             ╱                   │
                      ╲─────────╱                     │
                         │ YES                        │
                         ▼                            ▼
S38  ┌──────────────────────────┐  S39  ┌──────────────────────────┐
     │ OPERATE VALVE 15 TO       │       │ OPERATE VALVE 15 TO       │
     │ INCREASE COMBUSTION       │       │ DECREASE COMBUSTION       │
     │ GAS DISTRIBUTION TO       │       │ GAS DISTRIBUTION TO       │
     │ HEAT EXCHANGER            │       │ HEAT EXCHANGER            │
     └────────────┬─────────────┘       └────────────┬─────────────┘
                  │                                   │
                  │◄──────────────────────────────────┘
                  ▼
            ┌──────────┐
            │   END    │
            └──────────┘
```

# FIG. 8

## EUROPEAN SEARCH REPORT

European Patent Office

Application Number

EP 03 00 9436

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 2002, no. 06, 4 June 2002 (2002-06-04) & JP 2002 047002 A (TOYOTA MOTOR CORP), 12 February 2002 (2002-02-12) * abstract * | 1 | H01M8/06 |
| A | US 2002/058171 A1 (BIRK WOLFRAM) 16 May 2002 (2002-05-16) * paragraph [0013] - paragraph [0014] * | 1 | |
| A,D | PATENT ABSTRACTS OF JAPAN vol. 2000, no. 13, 5 February 2001 (2001-02-05) & JP 2000 285950 A (SANYO ELECTRIC CO LTD), 13 October 2000 (2000-10-13) * abstract * | 1 | |

TECHNICAL FIELDS SEARCHED (Int.Cl.7)

H01M

The present search report has been drawn up for all claims

| Place of search | Date of completion of the search | Examiner |
|---|---|---|
| BERLIN | 1 October 2003 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 00 9436

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2003

| Patent document cited in search report | Publication date | Patent family member(s) | | Publication date |
|---|---|---|---|---|
| JP 2002047002 A | 12-02-2002 | NONE | | |
| US 2002058171 A1 | 16-05-2002 | DE EP | 10055245 A1 1205992 A2 | 29-08-2002 15-05-2002 |
| JP 2000285950 A | 13-10-2000 | NONE | | |

EPO FORM P0459